# EUROPEAN PATENT SPECIFICATION

(11) **EP 3 945 658 B1**
(45) Date of publication and mention of the grant of the patent: **25.02.2026**
(21) Application number: 20188325.3
(22) Date of filing: 29.07.2020
(51) Int. Cl.: H02K 1/14, H02K 1/27, H02K 7/00, H02K 1/2733, H02K 7/116

(54) **POLYPHASE MOTOR, MANUFACTURING METHOD AND KITCHEN APPLIANCE**
MEHRPHASENMOTOR, HERSTELLUNGSVERFAHREN UND KÜCHENGERÄT
MOTEUR POLYPHASÉ, PROCÉDÉ DE FABRICATION ET APPAREIL DE CUISINE

(43) Date of publication of application: 02.02.2022
(73) Proprietor: BSH Hausgeräte GmbH, 81739 München (DE)
(72) Inventor: Balog, Ladislav, 07684 Leles (SK); Blaz, Robert, 06601 Humenne (SK); Farkas, Viliam, 07101 Michalovce (SK)

(56) References cited:
- EP-A1- 2 006 976
- EP-A1- 2 874 291
- EP-A2- 3 134 961
- WO-A1-2014/041313
- CN-U- 201 490 869
- DE-A1- 102013 105 964
- JP-A- 2007 259 625
- US-A1- 2019 229 573

## Description

The present invention concerns a polyphase motor having a stator comprising electric coils and a magnetised rotor, which rotates around a rotation axis within the stator when the electric coils are energised, a method for manufacturing the polyphase motor and a kitchen appliance.

A known polyphase motor is shown in the European patent EP 0 949 747 B1. The motor is a three-phase electric commutated motor having a stator excited by electric coils and by a magnetised rotor, which rotates around a rotation axis within the stator when the electric coils are energised. The stator provides a casing for receiving three electric coils. The electric coils are positioned radial outside to the rotor and are evenly spaced around its circumference. Each electric coil has one coil core. The coil cores are formed by radial, integral projections of the casing. In a top view, the core coils have the shape of an elongated rectangular body, whereas the radial inner end of the projections form the pole shoes. The poles shoes are rounded and positioned within the electric coils.

A further polyphase motor is disclosed in EP 2 874 291 A1.

In order to enhance the performance of the motor, pole shoes could be useful which are positioned outside of the electric coils and extending at least over a part of the electric coils.

It is, therefore, an object of the present invention to provide a polyphase motor with enlarged pole shoes which is easy to manufacture, a manufacturing method for such a polyphase motor and a kitchen appliance with a powerful polyphase motor.

The problem is solved by a polyphase motor according to claim 1, by a manufacturing method according to claim 7 and by a kitchen appliance according to claim 8. Advantageous embodiments are disclosed in the dependent claims, the description and the figures.

A polyphase motor according to the invention comprises a stator and a rotor. The stator is excited by electric coils. The rotor is magnetised and rotates around a rotation axis within the stator when the electric coils are energised. The stator forms a casing for receiving the electric coils. The electric coils are positioned radial outside the rotor and are evenly spaced around the circumference. Each electric coil has one coil core, wherein each coil core has an end section for interlocking with a counter element of the stator. On its opposite end, each coil core provides a pole shoe delimiting an area of a ring gap between the rotor and the respective electric coil.

In a preferred embodiment the polyphase motor is a three phase electrically commutated motor (3 phase EC motor). The motor is according to the invention produced by stacking several metal sheets of a magnetically material, this allowing magnetic flux but preventing eddy current in the stator casing if the adjacent metal sheets are isolated in an adequate manner. In this preferred embodiment, the motor has three electric coils as active teeth and three passive teeth. As the coil cores are not an integrated part of the stator casing, they can be inserted into the electric coils first, and then the electric coils with the inserted coil cores can be mounted to the stator casing. This enables the creating of large pole shoes as the electric coils do not have to be pushed from the pole shoes side on the coil cores. As in the preferred embodiment the pole shoes are an integral part of the core coils, the motor is compact.

Preferably, the interlocking end section has a dovetail-shaped projection and the stator casing shows a respective recess as counterpart. However, it is also possible to integrate the dovetail recess into the coil core and the dovetail-shaped projection into the stator recess. Dovetails connections are reliable, easy to manufacture and easy to assembly and to disassembly.

According to the invention, the coil cores are produced in the similar way as the stator casing, that means by stacking up several metal sheets of magnetic material. Preferably, electric isolating material sheets are positions between adjacent metal sheets, in order to increase its performance even more.

In order to increase motor torque and decrease vibration of the motor caused by cogging torque, the passive stator teeth helping to form a ring gap with a small radial extension surrounding the rotor. In order to create such small (thin) ring gap, the electric coils are positioned in reception rooms of the casing and between two adjacent reception rooms the passive teeth of the casing are formed having the same radial distance from the rotation axis of the rotor as the pole shoes.

The size of the motor can be effectively reduced, if electrical pins of the electrical coils which are necessary to establish an electrical connection between the coil windings and a circuit board such as a printed circuit board, are positioned close to each other, so that the circuit board can be of small size. This is achieved because the electrical pins are positioned at a radial inner position. Therefore, according to the invention the receptions rooms for the electric coils have at their radial inner portions lateral widenings (cut outs) adapted to receive the electrical pins which extends axially from one side to the other side of the electric coils.

In order to facilitate the assembly in a motor casing, each electric coil can have a bobbin with radially inner portions adapted to form stop faces at least on one stator side when the stator is assembled in a motor casing. Preferably, the stop faces are formed integrally at each bobbin. Preferably, the cut out are made of plastics.

In the preferred embodiment, the rotor comprises a Halbach sinusoidal oriented magnet ring. Such as magnet ring enables a quit running of the rotor and high motor torque.

Preferably, the rotor is made of plastics and forming integrally the rotor shaft, a bearing system, a pinion and axially limitations for the magnet ring. Due to this, both the manufacturing of the rotor and the compactness of the rotor is improved.

In order to avoid any loss of the magnetic ring from the rotor shaft and in order to transfer reliable rotation movements and torque moments between the magnetic ring and rotor shaft, a retention system is provided between the magnetic ring and the rotor shaft. The retention system is integrated into the rotor such that it is automatically created when rotor shaft is built up and the magnet ring is hold in position.

A method to manufacture a multiphase motor according to one of the preceding claims, proposes that the electric coils are releasable fixed to the stator casing by means of an interlocking connection between their active teeth and the stator casing. This has the major advantage that large pole shoes can be formed integrally with the active teeth, thus increasing motor torque and decrease vibration of the motor caused by cogging torque. The pole shoes can have a circumferential extension similar to or even larger than the extension of the electric coils in circumferential direction as the active teeth can be inserted into the electric coils with their end building the form-fit.

A kitchen appliance according to the invention comprises a polyphase motor according to an embodiment of the present invention. Such kitchen appliance has a powerful, compact quit and smooth running motor, resulting in a noise reduction.

In the following, a preferred embodiment of the present invention is explained with respect to accompanying drawings. As is to be understood, the various elements and components are depicted as examples only, may be facultative and/or combined in a manner different than that depicted. Reference signs for related elements are used comprehensively and not defined again for each figure. Shown is schematically in
- Fig. 1:: a sectional top view of an exemplary embodiment of a polyphase motor according to the present invention;
- Fig. 2: single stator sheets without an active teeth sheet,
- Fig. 3:: single stator sheets with a active teeth sheet,
- Fig. 4:: an enlarged view of a preferred interlocking connection of the coil core with the stator casing
- Fig. 5:: a back view of the exemplary embodiment,
- Fig. 6:: a front view of the exemplary embodiment,
- Fig. 7:: a perspective view of a rotor of the exemplary embodiment, and
- Fig. 8:: a longitudinal section of the rotor.

For illustrative purposes, only some elements are referenced with a reference number, even if there is more than one of the respective element shown in the figures.

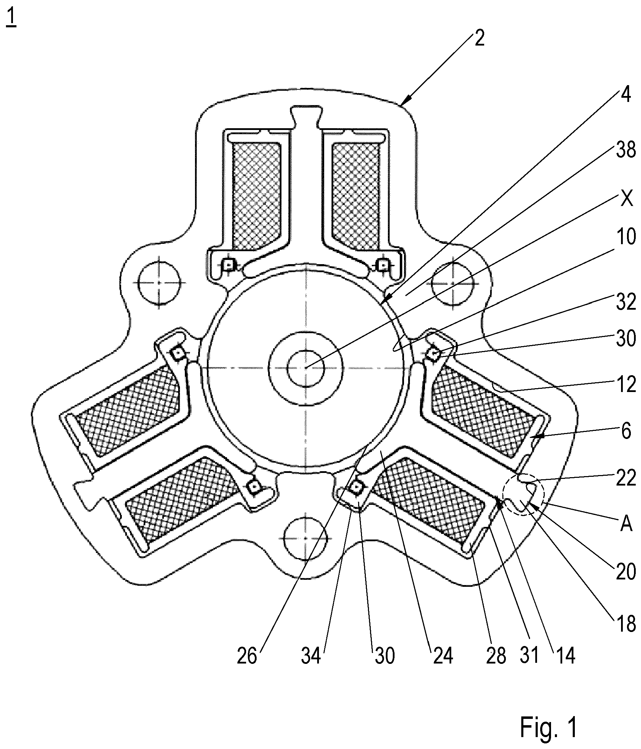

In Figure 1, a sectional top view on an exemplary embodiment of a polyphase motor 1 according to the present invention is shown. The polyphase motor 1 is a three phase electrical commutated motor (3 phase EC motor). The motor has a stator 2 and a rotor 4, which rotates around a rotation axis X within the stator 2 when electric coils 6 of the stator 1 are energised. Exemplary, the motor 1 is installed in a kitchen appliance and acting as drive system or being at least a part of a drive system.

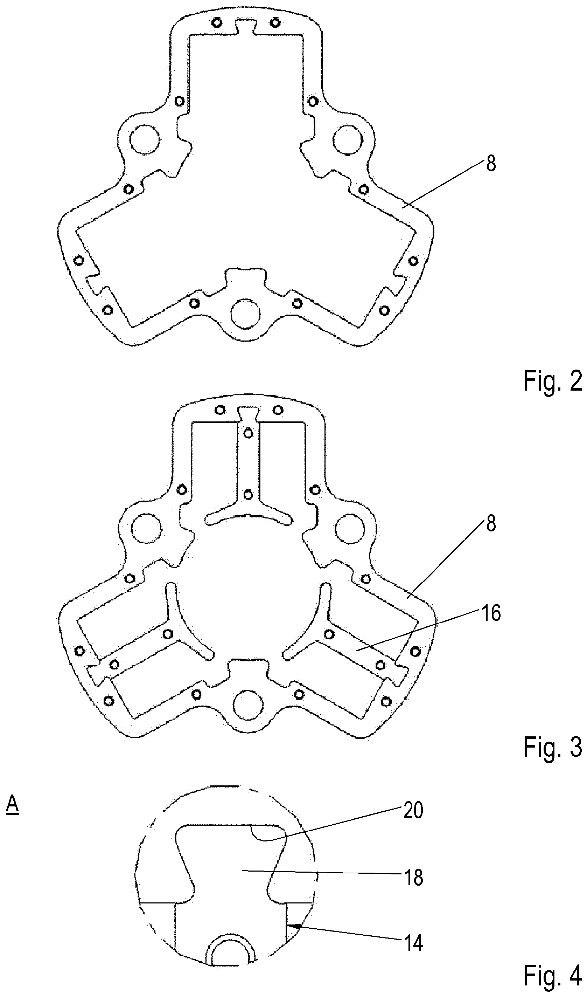

The stator 2 has a casing that is made by stacking several metal sheets 8 of a magnetically material (figures 2 and 3). Preferable, the metal sheets 8 are electrical isolated from each other in order to avoid eddy current which would reduce the performance of the motor 1.

Back to figure 1, the stator casing defines an internal space which is divided into one central portion 10 for receiving the rotor 4 and in three reception rooms 12 extending radially outwards from the central portion 10 and are evenly spaced around the circumference of the rotor. These portions of the stator 2 are also called stator yokes.

In each reception room 12 one electric coil 6 is positioned on a coil core 14. The coil cores 14, also called active teeth, are orientated radially inwards. They have a longitudinal cross section and are also made by stacking several metal sheets 16 of a magnetically material (figure 3). Preferable, the metal sheets 16 are also electrical isolated from each other in order to avoid eddy current which, again, would reduce the performance of the motor 1.

With their radial outer end, the active teeth 14 are releasable fixed to the stator casing via an interlocking connection 20. In the shown embodiment, the interlocking connection 20 is formed as a dovetail connection, wherein the active teeth 14 show dovetail projections 18 and the stator casing respective dovetail recesses 22 as counter-element (see in detail figure 4). The dovetail-connection 20 extents parallel to the rotation axis X.

As also illustrated in figures 1, radial inner ends of the active teeth 14 are enlarged in circumferential direction and formed as pole shoes 24 (see also figure 3). The pole shoes 24 extents from both sides of the active teeth 14 in circumferential direction nearly over the entire extension of each electric coil 6 in circumferential direction and are arc-shaped. Thus, the active teeth 14 together with the dovetail projections 18 and the integral formed pole shoes 24 have a T-like shape. The pole shoes 24 are arc-shaped in such a manner that they are in a close distance to the rotor 4, thus delimiting an area of an annular gap 26 between the rotor 4 and the respective electric coils 6.

The electric coils 6 have a bobbin 28, preferably a bobbin made of plastics. In order to facilitate an assembly and a positioning of the stator 2 in a motor casing, each bobbin 28 has two enlarged radially inward portions acting as stop faces 30 during the assembly. Preferably, the inward portions are only on one side of the stator 1, in particular on its back side. In order to facilitate the positioning of the electric coils 6 within the reception rooms 12, each bobbin 28 has on both sides of its recess for entering the active teeth 14 two longitudinal rails 31 extending in assembly direction of the electrical coils 6.

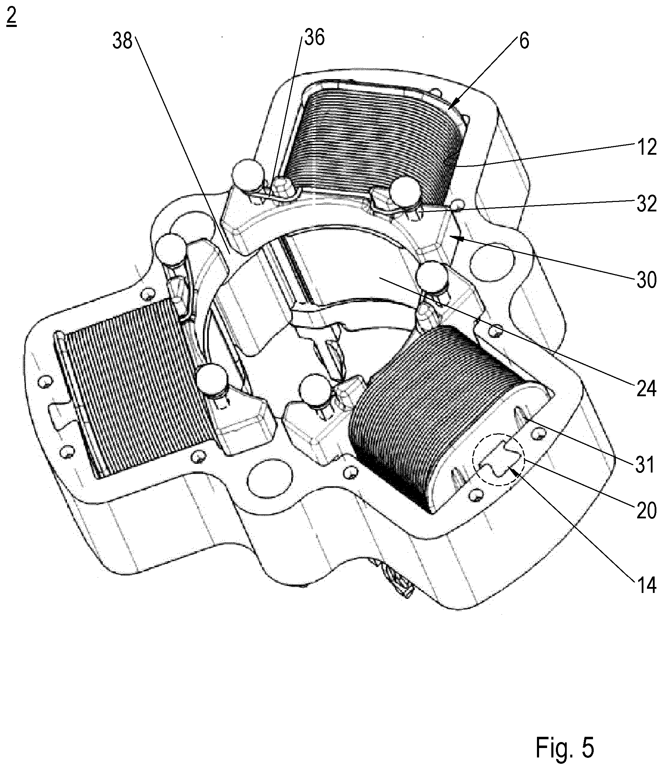

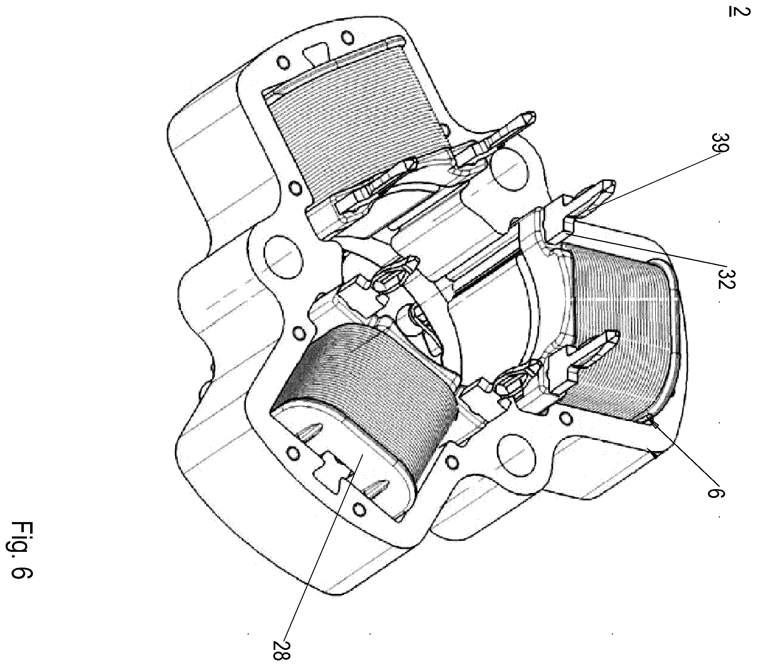

In order to connect the electric coils 6 electrically, for instance with a circuit board such as printed circuit board (PCB), three pairs of pins 32 are provided. Each electric coil 6 receives one pair of pins 32. The pins 32 are carried by the bobbin 28 and are positioned in radial inner lateral widenings 34 of the reception rooms 12. The pins 32 extend in axial direction over the entire length of the electric coils 6 parallel to the rotation axis X. On one side, in this embodiment the back side of the stator 1, each pin 32 receives one free end 36 of the coil windings (figure 5). On the opposite side, in this embodiment the front side of the stator 1, the pins 32 are electrically connected to the non-shown circuit board (figure 6). Due to the radial inner position of the circuit board, the circuit board itself is of reduced size.

Back to figure 1, between two adjacent reception rooms 12, portions 38 of the stator casing have the same radial distance from the rotation axis X as the pole shoes 24. These casing portions 38 are arc-shaped and are called passive teeth of the stator 1. In combination with the pole shoes 24, these passive teeth 38 build the small annular gap 26 between the rotor 4 and the stator 2.

In figure 5 and figure 6 a back view of the stator 2 and a front view of the stator 2 is shown ready for being assembled in a motor casing. The electric coils 6 with their windings, coils cores 14 and bobbins 28 are positioned in the reception rooms 12 on the active teeth 14 and the pole shoes 24 together with the passive teeth 38 between them delimiting the central portion 10 for the rotor 4. Each active tooth 14 is releasable interlocked with the stator casing via an interlocking connection 20, preferably a dovetail connection. As shown in figure 5, at the back of the stator 2, the stop faces 30 and the electric connection 36 of the electric coil windings with the pins 32 are illustrated. As shown in figure 6, at the front of the stator 2, the pins 32 with their electric contact elements 39 are provided for receiving the circuit board. In order to avoid any negative impact on the performance of the motor 1 such as short circuit current, the routing of electrical conduits of the pins 32 are electrically isolated within the pins 32.

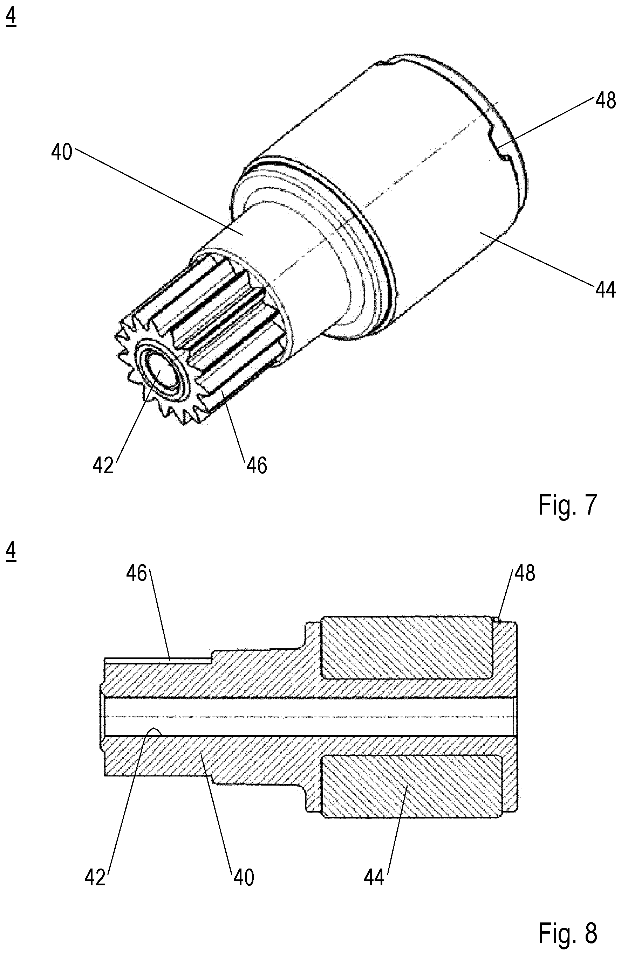

In figures 7 and 8, an inventive rotor 4 of the preferred embodiment of a polyphase motor 1 is shown. The rotor 4 comprises of a rotor shaft 40, bearing system 42 (shaft bearing), a magnet ring 44, and a pinion 46 in order to transfer its rotation and torque to a gearbox, for instance. The bearing system 42 is formed as a longitudinal through bore extending along the rotation axis X of the rotor shaft 40. Thus, the bearing system 42 is designed as a slide bearing. The magnet ring 44 is preferably designed as a Halbach sinusoidal oriented magnet ring.

The rotor shaft 40, the bearing system 42 and the pinion 46 are made of a plastics material and formed as one integral part. The magnetic ring 44 is positioned on the rotor shaft 40 and laterally coated, in particular overmolded, with plastics, whereby the magnetic ring 44 is fixed axially on the rotor shaft 40. In order to avoid any rotational slip between the magnetic ring 44 and the rotor shaft 40, at least one retention system 48 is provided securing the magnetic ring 44 in circumferential direction on the rotor shaft 40. The retention system 48 is preferably designed as an interlocking connection and formed integrally with the rotor 4. More preferably, three retention systems 48 are provided which are evenly spaced around the circumference of the magnetic ring 44.

In the following, a preferred method according to the invention is described. According to an inventive method of the invention, the stator casing and the active teeth 14 are built up separately.

The electric coils 6 are winded on their bobbins 28 and the pins 32 are fixed in the bobbins 28 or will be fixed to the bobbins 28 after the winding is finished. The pins 32 will be electronically connected with the coil windings.

After that, the active teeth 14 are introduced into the electric coils 6 and the electric coils 6 are mounted to the stator casing by form-fitting the dovetail projections 18 of the active teeth14 with the respective dovetail recesses 22 of the stator casing.

Thereby, the electric coils 6 positioned on the active teeth 14 are inserted axially into the reception rooms 12 until the final position in the stator casing is reached.

Then, the equipped stator 2 is positioned via its stop faces 30 in a motor casing and the rotor 1 is inserted in the central portion 10 of the stator 2, thereby being rotatable positioned around the rotation axis X via its bearing system 42 on a respective counterpart of the motor casing.

Disclosed is a multiphase motor 1 having a stator 2 comprising electric coils 6, and a magnetised rotor 4, which rotates around a rotation axis X within the stator 2 when the electric coils 6 are energised, wherein the stator provides a casing for receiving the electric coils 6, wherein the electric coils 6 are positioned radial outside to the rotor 4 and are evenly spaced around the circumference, and wherein each electric coil 6 has a coil core 14, wherein each coil core 14 has an end section 18 for interlocking with a counter element 20 of the stator 2 and at its opposite end a pole shoe 24 delimiting an area of an annular gap 26 between the rotor 4 and the respective electric coil 6, am manufacturing method of the motor and a kitchen appliance.

### Reference signs

- 1: motor
- 2: stator
- 4: rotor
- 6: electric coil
- 8: metal sheet (stator casing)
- 10: central portion
- 12: reception room / passive teeth
- 14: coil core / active teeth
- 16: metal sheet (coil core)
- 18: dovetail projection
- 20: interlocking connection
- 22: dovetail recess
- 24: pole shoe
- 26: annular gap
- 28: bobbin
- 30: stop face
- 31: rail
- 32: pin
- 34: widening / cut-out
- 36: free end of coil winding
- 38: portion of stator casing / passive teeth
- 39: electric contact element
- 40: rotor shaft
- 42: shaft bearing
- 44: magnet ring
- 46: pinion
- 48: retention system
- X: rotation axis of the rotor within the stator

## Claims

1. A polyphase motor, comprising:
a stator (2) comprising electric coils (6), and a magnetised rotor (4), which rotates around a rotation axis (X) within the stator (2) when the electric coils (6) are energised, wherein the stator provides a casing made from stacked metal sheets of magnetic material for receiving the electric coils (6), wherein the electric coils (6) are positioned radial outside to the rotor (4) and are evenly spaced around the circumference, and wherein each electric coil (6) has a coil core (14), wherein each coil core (14) has an end section (18) for interlocking with a counter element (20) of the stator (2) and at its opposite end a pole shoe (24) delimiting an area of an annular gap (26) between the rotor (4) and the respective electric coil (6),
wherein the coil cores (14) are produced by stacking up several metal sheets (16) of magnetic material, and
wherein the electric coils (6) are positioned in reception rooms (12) of the casing and between two adjacent reception rooms (12) the casing has basically the same radial distance from the rotation axis (X) as the pole shoes (24).
**characterized in that** the reception rooms (12) have lateral cut outs adapted to receive electrical pins (32) of the electric coils (6) which extends axially from one side to the other side of the electric coils (6),
wherein the electrical pins (32) are positioned at the radial inner end of the electrical coils (6) and the lateral cut outs are positioned at the radial inner end of the reception rooms (12).

2. A polyphase motor according to claim 1, wherein the interlocking end section (18) has a dovetail-shape.

3. A polyphase motor according to claim 1, wherein each electric coil (6) has a bobbin (28) with a radially inner portion adapted to form stop faces (30) when the stator (2) is assembled in a motor casing.

4. A polyphase motor according to any of the preceding claims, wherein the rotor (4) comprises a Halbach sinusoidal oriented magnet ring (44).

5. A polyphase motor according to any of the preceding claims, wherein the rotor (4) is made of plastic material integrally forming a rotor shaft (40), a shaft bearing system (42), a pinion (44) and axially limitations for the magnet ring (44).

6. A polyphase motor according to claim 5, wherein an integrated retention (48) system is provided in order to transfer rotation movements and torque moments between the magnetic ring (44) and the rotor shaft (40).

7. Method to manufacture a multiphase motor according to one of the preceding claims, wherein the electric coils (6) are releasable fixed to the stator casing by means of an interlocking connection (20) between the coil cores (14) and the stator casing.

8. Kitchen appliance comprising a polyphase motor according to one of the claims 1 to 6.

## Patentansprüche

1. Mehrphasenmotor, der Folgendes umfasst:
einen Stator (2) mit elektrischen Spulen (6) und einen magnetisierten Rotor (4), der sich um eine Rotationsachse (X) in dem Stator (2) dreht, wenn die elektrischen Spulen (6) bestromt werden, wobei der Stator ein Gehäuse, das aus gestapelten Blechen aus magnetischem Material hergestellt ist, zum Aufnehmen der elektrischen Spulen (6) bereitstellt, wobei die elektrischen Spulen (6) radial außerhalb des Rotors (4) angeordnet und gleichmäßig um den Umfang herum beabstandet sind und jede elektrische Spule (6) einen Spulenkern (14) aufweist, wobei jeder Spulenkern (14) einen Kopfabschnitt (18) zum Verriegeln mit einem Gegenelement (20) des Stators (2) und an seinem gegenüberliegenden Ende einen Polschuh (24) aufweist, der einen Bereich eines ringförmigen Spalts (26) zwischen dem Rotor (4) und der jeweiligen elektrischen Spule (6) begrenzt,
wobei die Spulenkerne (14) durch Stapeln mehrerer Bleche (16) aus magnetischem Material hergestellt sind und
wobei die elektrischen Spulen (6) in Aufnahmeräumen (12) des Gehäuses angeordnet sind und das Gehäuse zwischen zwei benachbarten Aufnahmeräumen (12) im Wesentlichen den gleichen radialen Abstand zur Rotationsachse (X) aufweist wie die Polschuhe (24),
**dadurch gekennzeichnet, dass** die Aufnahmeräume (12) seitliche Aussparungen aufweisen, die so ausgelegt sind, dass sie elektrische Anschlüsse (32) der elektrischen Spulen (6) aufnehmen können, die sich axial von einer Seite zur anderen Seite der elektrischen Spulen (6) erstrecken,
wobei die elektrischen Anschlüsse (32) am radial innenliegenden Ende der elektrischen Spulen (6) und die seitlichen Aussparungen am radial innenliegenden Ende der Aufnahmeräume (12) angeordnet sind.

2. Mehrphasenmotor nach Anspruch 1, wobei der Verriegelungskopfabschnitt (18) eine Schwalbenschwanzform aufweist.

3. Mehrphasenmotor nach Anspruch 1, wobei jede elektrische Spule (6) einen Spulenkörper (28) mit einem radial innenliegenden Abschnitt aufweist, der so ausgelegt ist, dass er Anschlagflächen (30) bildet, wenn der Stator (2) in einem Motorgehäuse montiert ist.

4. Mehrphasenmotor nach einem der vorhergehenden Ansprüche, wobei der Rotor (4) einen sinusförmig ausgerichteten Halbach-Magnetring (44) umfasst.

5. Mehrphasenmotor nach einem der vorhergehenden Ansprüche, wobei der Rotor (4) aus Kunststoffmaterial hergestellt ist, das einstückig eine Rotorwelle (40), ein Wellenlagersystem (42), ein Ritzel (46) und axiale Begrenzungen für den Magnetring (44) bildet.

6. Mehrphasenmotor nach Anspruch 5, wobei ein integriertes Haltesystem (48) vorgesehen ist, damit Drehbewegungen und Drehmomentbewegungen zwischen dem Magnetring (44) und der Rotorwelle (40) übertragen werden.

7. Verfahren zum Fertigen eines Mehrphasenmotors nach einem der vorhergehenden Ansprüche, wobei die elektrischen Spulen (6) mithilfe einer Verriegelungsverbindung (20) zwischen den Spulenkernen (14) und dem Statorgehäuse lösbar an dem Stator befestigt sind.

8. Küchengerät mit einem Mehrphasenmotor nach einem der Ansprüche 1 bis 6.

## Revendications

1. Moteur polyphasé, comprenant :
un stator (2) comprenant des bobines électriques (6), et un rotor (4) magnétisé, qui tourne autour d'un axe de rotation (X) à l'intérieur du stator (2) lorsque les bobines électriques (6) sont sous tension, dans lequel le stator fournit un carter fabriqué à partir de feuilles métalliques empilées de matériau magnétique pour recevoir les bobines électriques (6), dans lequel les bobines électriques (6) sont positionnées de manière radiale à l'extérieur du rotor (4) et sont espacées de manière égale autour de la circonférence, et dans lequel chaque bobine électrique (6) présente un noyau de bobine (14), dans lequel chaque noyau de bobine (14) présente une section d'extrémité (18) pour l'interverrouillage avec un contre-élément (20) du stator (2) et à son extrémité opposée une semelle de pilier (24) délimitant une zone d'un espace annulaire (26) entre le rotor (4) et la bobine électrique (6) respective,
dans lequel les noyaux de bobine (14) sont produits par empilement allant jusqu'à plusieurs feuilles métalliques (16) de matériau magnétique, et
dans lequel les bobines électriques (6) sont positionnées dans des salles de réception (12) du carter et entre deux salles de réception (12) adjacentes, le carter présente basiquement la même distance radiale depuis l'axe de rotation (X) que les semelles de pilier (24),
**caractérisé en ce que** les salles de réception (12) présentent des découpes latérales adaptées pour recevoir des goupilles électriques (32) des bobines électriques (6) qui s'étendent axialement depuis un côté vers l'autre côté des bobines électriques (6),
dans lequel les goupilles électriques (32) sont positionnées au niveau de l'extrémité interne radiale des bobines électriques (6) et les découpes latérales sont positionnées au niveau de l'extrémité interne radiale des salles de réception (12).

2. Moteur polyphasé selon la revendication 1, dans lequel la section d'extrémité (18) d'interverrouillage présente une forme en queue d'aronde.

3. Moteur polyphasé selon la revendication 1, dans lequel chaque bobine électrique (6) présente une bobine (28) avec une portion radialement interne adaptée pour former des faces d'arrêt (30) lorsque le stator (2) est assemblé dans un carter de moteur.

4. Moteur polyphasé selon l'une quelconque des revendications précédentes, dans lequel le rotor (4) comprend un anneau d'aimant (44) orienté sinusoïdal de Halbach.

5. Moteur polyphasé selon l'une quelconque des revendications précédentes, dans lequel le rotor (4) est constitué de matière plastique formant intégralement un arbre de rotor (40), un système de support d'arbre (42), un pignon (46) et des restrictions axialement pour l'anneau d'aimant (44).

6. Moteur polyphasé selon la revendication 5, dans lequel un système de rétention intégré (48) est prévu afin de transférer des mouvements de rotation et des moments de torque entre l'anneau magnétique (44) et l'arbre de rotor (40).

7. Procédé de fabrication d'un moteur multiphasé selon l'une des revendications précédentes, dans lequel les bobines électriques (6) sont fixées de manière à pouvoir être libérées au carter de stator à l'aide d'un raccordement d'interverrouillage (20) entre les noyaux de bobine (14) et le carter de stator.

8. Appareil de cuisine comprenant un moteur polyphasé selon l'une des revendications 1 à 6.
